# EUROPEAN PATENT APPLICATION

(11) **EP 2 623 769 A1**
(43) Date of publication of application: **07.08.2013**
(21) Application number: 12153490.3
(22) Date of filing: 01.02.2012
(51) Int. Cl.: F03D 1/06

(54) **Wind turbine blade with a connection ring forming part of a blade root - to - hub connection**

(71) Applicant: LM Wind Power A/S, 6000 Kolding (DK)
(72) Inventor: Petersen, Kurt, 6851 Janderup (DK); Garm, Jesper Hasselbalch, 6000 Kolding (DK)

(57) **Abstract**

A blade 6 for a wind turbine rotor having a hub 5 as a root 7 and is formed of a fibre reinforced composite material. The blade 6 comprises a connection ring 15 forming part of a hub to root connection 16 between the blade 6 and the hub 5. The connection ring 15 comprises a ring shaped element 17 having a radially outer surface 18 and a radially inner surface 19, a first axial face 20 and opposite second axial face 21. The first axial face 20 is an axially facing end face of the root 7 of the blade 6. The second axial face 21 is provided with a plurality of elongated rod shaped elements 22 extending circumferentially interspaced from the second axial face and being embedded in the composite material of the blade.

## Description

The present invention relates to a wind turbine blade with a connection ring forming part of a blade root - to - hub connection and a method for manufacturing such a blade.

More specifically the present invention relates to a blade for a wind turbine rotor having a hub to which the blade is to be connected, said blade having a root and being formed of a fibre reinforced composite material comprising reinforcement fibres embedded in a polymer matrix.

One way of connecting blades to the hub is by means of bushings being embedded in the root region of the blade. The blades are connected to the hub by means of bolts engaging the threads of the bushings.

This solution has certain drawbacks, especially when used for larger blades, i.e. blades having a length of 40 meters or more. In order to maintain the bushings in the composite material the bushings need to be surrounded by a certain amount of material, which result in increased diameter of the root. Further, the bushing needs to have a certain wall thickness in order to accommodate the threads for the bolts. Additionally, the bolts need to have a certain diameter in order to reliable connect the blade to the hub. All in all, a larger diameter of the root than desirable is needed in order to transfer the loads between the hub and the root of the blade. A large diameter of the root entails a heavier blade and a larger drag than for a blade with a smaller root diameter. Today, almost all larger wind turbines are provided with pitch bearings between the blades and the hub. A large diameter of the root of the blade entails a larger pitch bearing and thereby also a more expensive pitch bearing than for a blade with a small diameter. Pitch bearings are normally ball or roller bearings having an outer bearing ring connected to the hub and an inner bearing ring connected to the root of the blade. The inner bearing ring is typically connected to the root of the blade by using bolts threaded into the threads of the bushings embedded in the composite material of the blade.

EP2078851 A1 discloses the use of bolts in the root of the blade and additionally discloses connections between pitch bearings and the blade roots.

DE2026013519 U1 discloses a blade connected to a pitch bearing by means of bolts.

US5173023 discloses a wind turbine blade connected to a hub, the blade being provided with a cuff with a root end flange. The hub is provided with a corresponding hub flange. A clamp ring comprising two sections is provided with a flange receiving and clamping grooves and the connections are interconnected by means of fasteners. The root end flange and the hub flange are received in grooves of the clamp ring sections whereby the blade is connected to the hub.

The object of the present invention is to provide a wind turbine blade which overcomes at least one of the disadvantages of prior art or at least provides a useful alternative in respect to the connection between the blade root and the hub.

The object is obtained in that the blade comprise a connection ring forming a part of the hub to root connection between the blade and the hub, said connection ring comprising a ring shaped element having a radially outer surface and a radially inner surface, a first axial face and an opposite second axial face, said first axial face being an axially facing end face of the root of the blade and said second axial face being provided with a plurality of elongated elements extending circumferentially interspaced from the second axial face and being embedded in the composite material of the blade.

A large number of elongated elements are provided, typical more than 50 elongated elements and up to about 150 elongated elements, depending of the diameter of the root. Such a large number of elongated elements being embedded in the composite material of the blade allow for a reliable retainment and maintenance of the connection ring in the root and thereby also allow for a reliable root to hub connection. Further, the use of a connection ring advantageously provides rigidity or stiffness to the root blade. In one embodiment, the centre to centre distance between elongated elements is between 50 mm and 125 mm, advantageously between 60 mm and 120 mm, corresponding to between 8 and 20 elongated elements per meter circumference, advantageously between 8.3 and 16.7 elements per meter circumference.

One or more blades according to the invention may be connected to the hub such as three blades so that the rotor comprises three blades equidistantly connected to the hub. The rotor is typically a rotor for a conventional up wind turbine according to the so-called "Danish concept".

Each blade is typically of the type having a root region and airfoil region ending in a tip and optionally a transition region between the root region and the air foil region.

According to an embodiment the connection ring is made of metal, preferably iron or steel. Thereby an optimal strength and thereby also an optimal rigidity is obtained.

According to a further embodiment the ring shaped element of the connection ring is formed of a number of mutually connected ring segments, preferably two mutually connected ring halves. It should however be noted that the ring shaped element of the connection ring may be integrally formed, i.e. formed as a full ring.

According to a further embodiment the elongated elements extending from the axial face of the ring shaped element are rod shaped elements, preferably solid rod shaped elements. It should however be noted that the ring shaped elements may also be hollow rod shaped elements.

According to an embodiment of the invention the rod shaped elements have an essentially circular cylindrical outer surface.

The rod shaped elements can be tapering. The rod shaped elements may taper as seen from the second axial face of the ring shaped element or in the opposite direction. The rod shaped elements may taper continuously or stepwise. Further the rod shaped elements may have a corrugated outer surface whereby an improved retainment of the rod shaped elements and thereby the connection ring in the composite material is obtained.

Additionally the rod shaped elements may have a rough outer surface in order thereby to further improve the retainment in the composite material of the blade.

The rod shaped elements or longitudinal axes thereof can be oriented essentially parallel. However, at least some of the elongated elements may also be oriented obliquely in relation to each other in order to thereby improve the retainment of the connection ring in the composite material.

The elongated elements may be formed integrally with the ring shaped element of the connection ring. In other words the connection ring may be integrally formed such as by being moulded. Alternatively, the ring shaped element and the elongated elements may be separately formed and mutually connected.

The rod shaped elements may be connected to the ring shaped element by welding. However, the rod shaped elements may also be connected to the ring shaped element through a thread joint. Preferably, the rod shaped elements are provided with an outer thread engaging a corresponding threaded hole in the ring shaped element. It is also possible to use a shrink fit.

According to a further embodiment, the hub to root connection comprises a pitch bearing comprising a first bearing ring connected to the blade and a second bearing ring connected to the hub.

The first bearing ring may according to the invention be the inner bearing ring of the pitch bearing.

In should however be noted that the first bearing ring may also be an outer bearing ring of the pitch bearing.

The pitch bearing can be a ball or a roller bearing or a combination thereof.

According to a further embodiment the connection ring forms the first bearing ring. In other words the connection ring being a part of the blade forms the inner bearing ring of the pitch bearing and thereby the bearing ring having the smallest diameter.

According to a further embodiment the hub to root connection comprises a first annular flange formed on the outer surface of the connection ring, a second annular flange formed on an outer surface of the first bearing ring and a clamp ring comprising at least two separate clamp sections, each having a flange receiving and clamping groove, and fastening means for interconnecting said clamp ring sections to exert tension for retaining said flanges in said grooves.

The flange of the connection ring and the first bearing ring, respectively, and the grooves of the clamp ring sections are formed such that the connection ring and the first bearing ring are brought into tight abutment with each other when the fastening means between the two clamp ring sections is tightened. Thereby, a reliable connection between the connecting ring and the first bearing ring is provided.

According to an embodiment, the outer surface of the connection ring and the first bearing ring respectively are a radially outer surface thereof. Thereby, only two clamp ring sections are needed in order to connect the connection ring and the first bearing ring. It should however be noted that the connection ring and the first bearing ring, respectively, may also be radially inner surfaces thereof. In this case the clamp ring needs to comprise at least three clamp ring sections.

The grooves of the clamp ring sections can be provided with mutually facing clamping surfaces diverging radially inwardly and cooperating with corresponding faces on an outer flange on the connection ring and first bearing ring, respectively. Alternatively, the clamping surfaces may be facing outwardly and cooperating with inner flanges. Accordingly, it is seen that the claim ring or clamp ring sections may be arranged internally or externally.

According to a second aspect, the present invention relates to a method a manufacturing a wind turbine blade comprising a first blade shell half and a second blade shell half being interconnected along a leading edge and a trailing edge of the blade, said blade having a root and being formed of a fibre reinforced composite material comprising reinforcement fibres embedded in a polymer matrix, said blade comprising a connection ring forming part of a root to hub connection between the hub and the root of the blade, said connection ring comprising a ring shaped element having a radially inner and a radially outer surface and a first and a second axial face, the first axial face being an end face of the root of the blade and the second axial face being provided with a plurality of elongated elements extending circumferentially interspaced from the second axial face and being embedded in the composite material of the blade and wherein said connection ring is formed of a first and second connection ring half together forming the connection ring, said method comprising the following steps:
A1 - providing a first mould having a first mould surface for forming an outer surface of the first blade half including a root half surface thereof,
B1 - arranging the first connection ring half in the root half surface of the first mould so as to form an end wall of the first mould,
C1- arranging reinforcement fibres in the first mould so as to cover the first mould surface and enclose the elongated elements of the first connection ring half,
D1- supplying polymer to the first mould during step C1 and/or subsequent thereto so as to impregnate the fibres,
E1- allowing the polymer to cure so as to form the first blade half,
A2- providing a second mould having a second mould surface for forming an outer surface of the second blade half including a root half thereof,
B2- arranging the second connection ring half in the root half surface of the second mould so as to form an end wall of the second mould,
C2- arranging reinforcement fibres in the second mould so as to cover the second mould surface and enclose the elongated elements of the second connection ring half,
D2- supplying polymer to the second mould during step C2 and/or subsequent thereto so as to impregnate the fibres,
E2- allowing the polymer to cure so as to form the second blade half,
F- adhesively connection the first and second blade half so as to form the blade.

The above method provides a wind turbine blade having a root with a connection ring reliably retained thereto and thereby allowing for a reliable root to hub connection between the hub and the root of the blade.

According to an embodiment, between step C1 and D1 and C2 and D2, respectively, a vacuum bag is arranged on top of the mould and the vacuum bag sealed to the respective mould to define a mould cavity and the mould cavity is evacuated. By forming a mould cavity and evacuating said mould cavity, the quality and thereby strength of the composite material is improved considerably independent of whether the blade or the blade halves are manufactured by use of VARTM (Vacuum assisted resin transfer moulding), pre-impregnated fibre material (prepregs), or a combination of VARTM and prepregs is used.

Advantageously, the connection ring is made of metal preferably steel or iron.

According to a further embodiment, the first and second connection ring halves are mutually connected during step F or subsequent thereto.

The connection ring halves can be mutually connected by means of mechanical connection means, such as bolts or screws.

The connection ring halves may however also be mutually connected by means of gluing, welding, brazing or soldering.

According to a further embodiment the connection ring is a bearing ring of a pitch bearing forming part of the root to hub connection.

Advantageously, the bearing ring is an inner bearing ring of the pitch bearing, the inner bearing ring being the bearing ring having the smallest diameter.

Further, according to an embodiment of the invention, the connection ring is provided with an annular flange on the radially outer or inner surface thereof. Preferably, the connection ring is provided with an annular flange on the radially outer surface thereof.

It should be noted that the connection ring instead of being formed of two ring halves also could be formed as a full ring.

Additionally it should be noted that the connection ring could be provided with means for connecting it to the hub, such as bolt holes for bolting the connecting ring and thereby the blade directly to the hub or stay bolts to be received in holes in the hub and fastened thereto by means of nuts engaging the stay bolts.

The invention is explained in detail below reference to the drawings, in which
Fig. 1 shows a wind turbine,
Fig. 2 shows a longitudinal sectional view through a root section of a first embodiment of the wind turbine blade according to the invention connected to the hub of the rotor of the wind turbine.
Fig. 3 shows a longitudinal sectional view of the root section of a second embodiment of the blade according to the invention connected to the hub of a rotor of a wind turbine,
Fig. 4 shows a clamp ring forming part of a hub to root connection for connecting the root of the blade to the hub of the embodiment shown in Fig. 3,
Fig. 5 shows a plan view of a first and a second mould for moulding a first and a second blade half, which are to be connected to form the second embodiment of the blade shown in Fig. 3,
Fig. 6 shows an enlarged end view of the second mould shown on the right hand in Fig. 5, and
Fig. 7 shows an enlarged plan view of the root region of the mould shown on the right hand in Fig. 5.

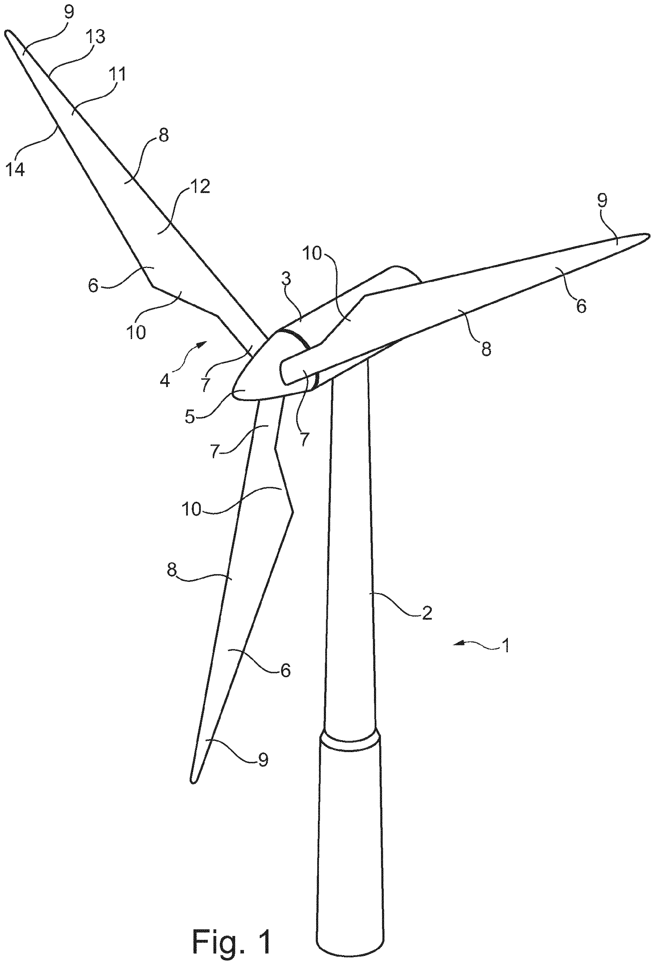

Fig. 1 illustrates a conventional up wind turbine 1 according to the so-called "Danish concept", comprising a tower 2, a nacelle 3 and a rotor 4 with a substantially horizontal rotor shaft. The rotor 4 includes a hub 5 and three wind turbine blades 6 extending radially from the hub. Each wind turbine blade 6 comprises a root 7 nearest the hub 5, an airfoil region 8 with a lift generating profile ending in a tip 9 and a transition region 10 between the root and the airfoil region. The blade 6 is provided with a suction side 11 and a pressure side 12 as well as a leading edge 13 and trailing edge 14.

The wind turbine blade 6 is formed of a fibre reinforced composite material comprising reinforcement fibres embedded in a polymer matrix. The fibres are typically glass fibres or carbon fibres; however, the fibres can be any type of fibres including metal fibres. The polymer matrix may be a thermoplastic polymer or a thermosetting polymer, such as polyester or epoxy or any other suitable polymer.

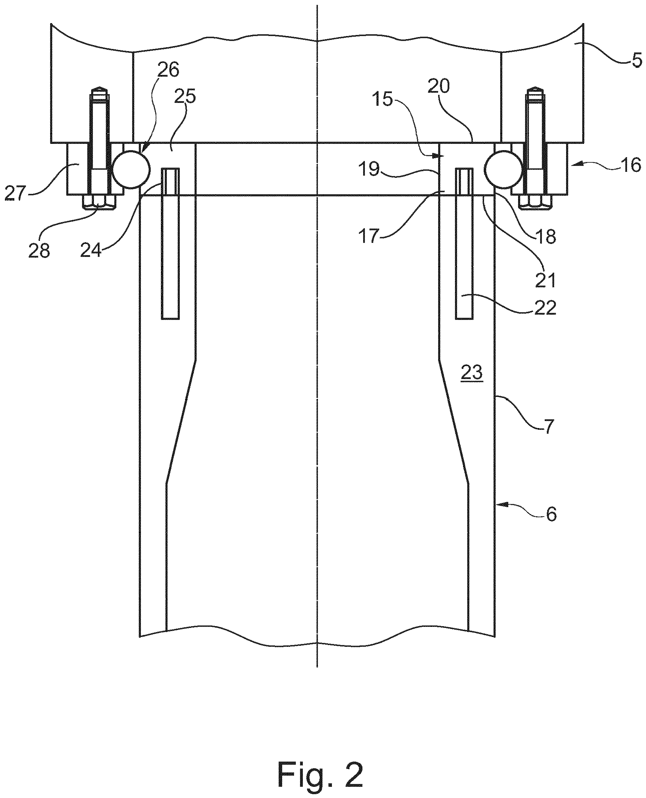

In the embodiment according to the invention shown in Fig. 2, the blade 6 comprises a connection ring 15 forming a part of a hub to root connection 16 between the root 7 of the blade and the hub 5. The connection ring 15 comprises a ring shaped element 17 having a radially outer surface 18 and a radially inner surface 19, a first axial face 20 and an opposite second axial face 21. The first axial face 20 is an axially facing end face of the root 7 of the blade 6. The second axial face 21 is provided with a plurality of elongated elements 22 extending circumferentially interspaced from the second axial face 21 and being embedded in the composite material 23 of the blade 6.

The connection ring 15 is made of metal, preferably steel, and the ring shaped element 17 is formed by two mutually connected ring halves so that the connection ring is formed by two mutually connected connection ring halves. The ring shaped element 17 of the connection ring may, however, also be formed as a full ring. The elongated elements 22 extending from the second axial face 21 of the ring shaped element 17 are in the embodiment shown formed as solid rod shaped elements having a circular cylindrical outer surface. The elongated elements 22 are each provided with a thread 24 threaded into a corresponding threaded hole in the ring shaped element. The elongated elements are also made of steel, and the number thereof is typical in the magnitude of order of 50-150 depending of the diameter of the root of the blade.

In the embodiment shown in Fig. 2, the connection ring 15 forms the inner ring 25 of a pitch bearing 26. The outer ring 27 of the pitch bearing 26 is connected to the hub 5 by means of a number of bolts 28. As shown in Fig. 2, the pitch bearing is a ball bearing.

The pitch bearing could, however, also be any kind of bearing, including a roller bearing or a combination of a roller bearing and a ball bearing.

The connection ring 15 together with the pitch bearing 26 and the bolts 28 form the hub to root connection 16 between the root 7 of the blade 6 and the hub 5.

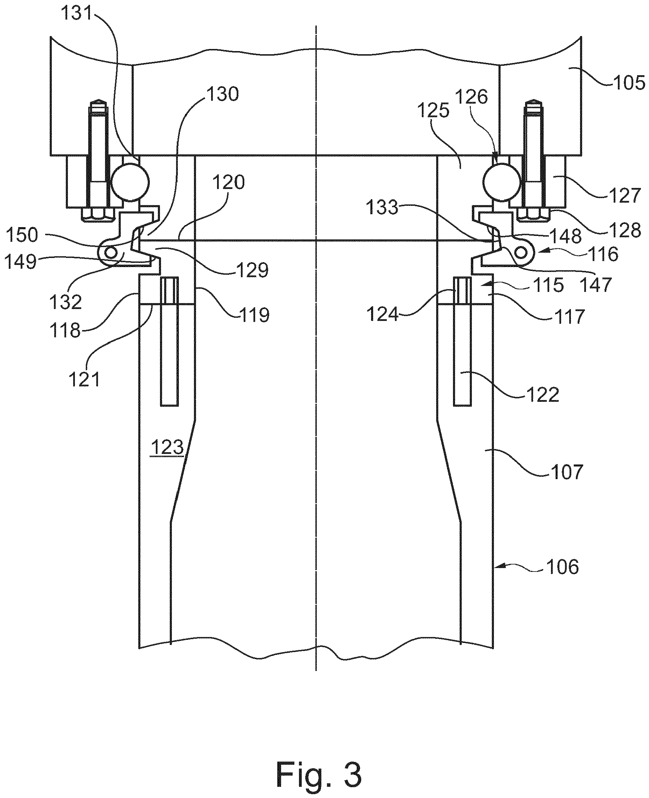

In the embodiment of the blade 106 shown in Fig. 3, the blade is provided with a connection ring 115 forming part of a hub to root connection 116 between the blade 106 and the hub 105. The connection ring 115 comprises a ring shaped element 117 having a radially outer surface 118 and a radially inner surface 119. The connection ring also has a first axial face 120 and an opposite second axial face 121. The first axial face 120 is an axially facing end face of the root 107 of the blade 106. The second axial face 121 is provided with a plurality of elongated elements 122 extending circumferentially interspaced from the second axial face 21 and being embedded in the composite material 123 of the blade 106. The elongated elements 122 are rod shaped elements having a circular cylindrical outer surface. The rod element are provided with an outer thread 124 being threaded into a corresponding threaded hole in the ring shaped element 117. The ring shaped element 117 and the elongated elements 122 are made of steel. The ring shaped element 117 is formed of two mutually connected ring halves so that the connection ring 115 is formed of two mutually connected connection ring halves 115A, 115B.

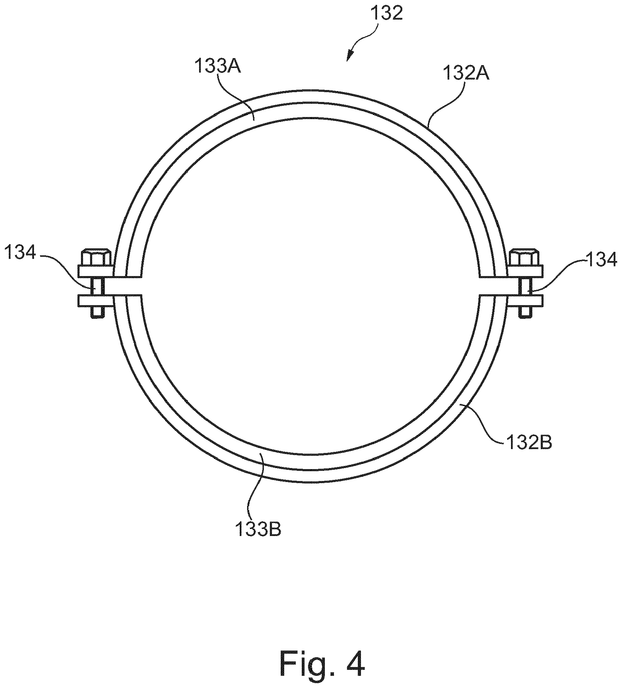

In addition to the connection ring 115, the hub to root connection 116 comprises a pitch bearing 126 comprising an inner bearing ring 125, an outer bearing ring 127 and balls there between as well as bolts 128 connecting the outer bearing ring 127 to the hub 105. The ring shaped element 117 of the connection ring 115 is provided with a first annular flange 129 formed on the radially outer surface 118 thereof. A second annular flange 130 is formed on an outer surface 131 of the inner bearing ring 125. The hub to root connection 116 further comprises a clamp ring 132 comprising two separate clamp ring sections 132A, 132B each having a flange receiving and clamping groove 133A, 133B, see Fig. 4. The clamping grooves 133A, 133B are provided with mutually facing clamping surfaces 147, 148 diverging radially inwardly a cooperating with corresponding faces 149, 150 on the flanges 129, 130. The clamp ring sections 132A, 132B are mutually interconnected by means of fastening means, which in the present example are formed by bolt connections 134. The bolt connections allow for exerting adjustable tension to the clamp ring sections for retaining the flanges 129, 130 in said grooves 133A, 133B and tightly clamping the inner bearing ring 125 to the connection ring 115 due to the engagement between the clamping surfaces 147, 148 and the faces 149, 150.

In an alternative embodiment, the clamp ring sections are arranged internally on inwardly facing flanges of the connection ring and the bearing ring.

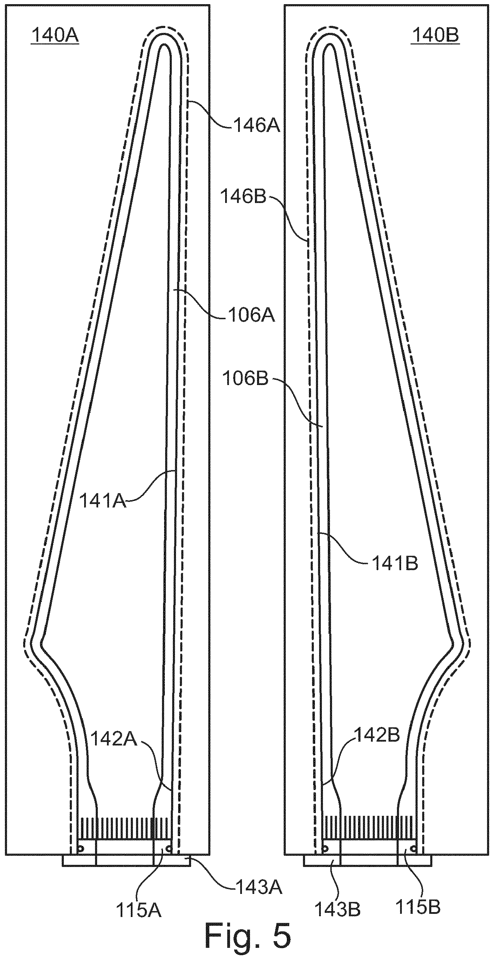

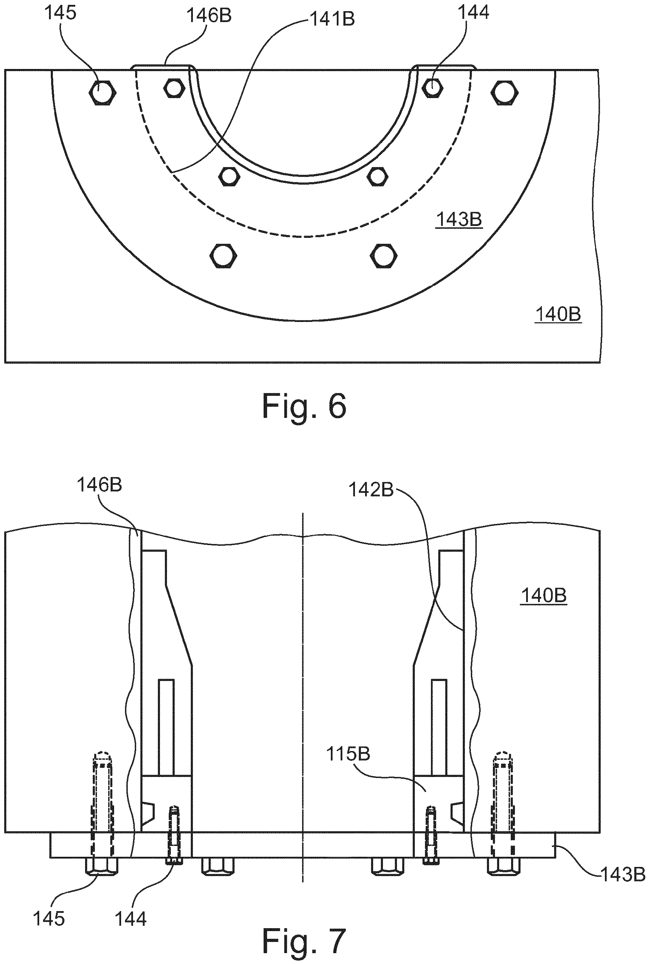

The method according to the invention for manufacturing the blade 106 shown in Fig. 3 is described below with reference to Fig. 5 to Fig. 7.

The blade 106 is formed of a first blade shell half 106A and a second blade shell half 106B, which are interconnected along a leading edge and a trailing edge of the blade. The first blade shell half 106A forming the pressure side of the blade is moulded in a first mould 140A having a first mould surface 141A for forming an outer surface of the first blade half, i.e. the pressure side of the blade, including a first root half surface 142A thereof. The second blade shell half 106B forming the suction side of the blade is moulded in a second mould 140B having a second mould surface 141 B for forming an outer surface of the second blade half, i.e. the suction side, including a second root half surface 142B thereof. The first blade shell half 106A is manufactured as follows:
- A first connection ring half 115A is arranged on the first root half's surface 142A of the first mould 140A so as to form an end wall of the first mould 140A. The first connection ring half 115A is positioned and the maintaining the first mould 140A by means of a first fixture 143A, the first connection ring half 115A being connected to the first fixture 143A by means of first screws 144 and the first fixture 143A being connected to the first mould 140A by means of second screws 145.
- Reinforcement fibres are arranged in the first mould 140A so as to cover the first mould surface 141A and enclose the elongated elements 122 of the first connection ring half 115A.
- A first vacuum bag 146A is arranged on top of the first mould and the vacuum bag is sealed to the mould to define a mould cavity and the mould cavity is evacuated.
- Polymer is supplied to the first mould where after the polymer is allowed to cure so as to form the first blade half 106A.

The second shell half 106B of the blade, i.e. the suction side of the blade, is manufactured in the second mould 140B as follows:
- The second connection ring half 115B is arranged in the second root half surface 142B of the second mould 140B so as to form an end wall of the second mould.
- The second connection ring half 115B is positioned and maintained in the second mould by means of a second fixture. The second connection ring half is connected to the second fixture 143B by means of first screws 144 and the second fixture 143B is connected to the second mould 140B by means of second screws 145.
- Reinforcement fibres are arranged in the second mould so as to cover the second mould surface 141 B and enclose the elongated elements 122 of the second connection ring half 115B.
- A second vacuum bag 146B is arranged on top of the second mould and the vacuum bag is sealed to the mould to define a mould cavity and the mould cavity is evacuated.
- Polymer is supplied to the cavity of the second mould so as to impregnate the fibres.
- The polymer is allowed to cure so as to form the second blade half.
- Subsequently, the vacuum bags are removed from the respective moulds and the formed first and second mould halves are adhesively connected to each other while being maintained in the respective mould.
- Subsequently, the formed wind turbine blade is removed from the moulds and the connection ring halves 115A, 115B thereof are connected to each other by means of mechanical means or by means of welding, braising, soldering or gluing the respective halves to each other.

In the embodiment of the method according to the invention, the connection ring 115 is formed of two connection ring halves 115A, 115B. It should however be noted that the connection ring could be a full ring.

Further, it should be noted that instead of being formed by vacuum assisted resin transfer moulding (VARTM) as described above, the blade halves could be manufactured by using pre-impregnated fibres (prepregs) or by using a combination of prepregs and VARTM.

Finally, it should be noted that instead of being formed of two blade shell halves the blade could be formed in a single moulding by so-called hollow moulding.

### List of reference numbers

1 Wind turbine
2 Tower
3 Nacelle
4 Rotor
5 Hub
6 Wind turbine blades
7 Root
8 Air foil region
9 Tip
10 Transition region
11 Suction side
12 Pressure side
13 Leading edge
14 Trailing edge
15 Connection ring
16 Hub to root connection
17 Ring shaped element
18 Radially outer surface
19 Radially inner surface
20 First axial face (end face)
21 Second axial face
22 Elongated element
23 Composite material
24 Outer thread
25 Inner ring
26 Pitch bearing
27 Outer ring
28 Bolts
105 Hub
106 Wind turbine blade
106A First blade shell half (pressure side)
106B Second blade shell half (suction side)
107 Root
115 Connection ring
115A First connection ring half
115B Second connection ring half
116 Hub to root connection
117 Ring shaped element
118 Radially outer surface
119 Radially inner surface
120 First axial face (end face)
121 Second axial face
122 Elongated element
123 Composite material
124 Outer thread
125 Inner ring
126 Pitch bearing
127 Outer ring
128 Bolts
129 First annular flange
130 Second annular flange
131 Outer surface of the bearing ring
132 Clamp ring
132A Clamp ring section
132B Clamp ring section
133A Flange receiving and clamping groove
133B Flange receiving and clamping groove
134 Bolt connection
140A First mould
140B Second mould
141A First mould surface
141 B Second mould surface
142A First root half surface
142B Second root half surface
143A First fixture
143B Second fixture
144 First screws
145 Second screws
146A First vacuum bag
146B Second vacuum bag
147 Clamping surface
148 Clamping surface
149 Face
150 Face

## Claims

1. A blade (6, 106) for a wind turbine rotor (4) having a hub (5, 105) to which the blade is to be connected, said blade (6, 106) having a root (7, 107) and being formed of a fibre reinforced composite material comprising reinforcement fibres embedded in a polymer matrix, **characterised in that** the blade comprises a connection ring (15, 115) forming a part of a hub to root connection (16, 116) between the blade and the hub, said connection ring (15, 115) comprising a ring shaped element (17, 117) having a radially outer surface (18, 118) and a radially inner surface (19, 119), a first axial face (20, 120) and opposite second axial face (21, 121), said first axial face being an axially facing end face of the root (7, 107) of the blade (6, 106) and said second axial face being provided with a plurality of elongated elements (22, 122) extending circumferentially interspaced from the second axial face (21, 121) and being embedded in the composite material of the blade.

2. Blade according to claim 1 wherein the connection ring (15, 115) is made of metal, preferably iron or steel.

3. Blade according to any of the claims 1 and 2 wherein the ring shaped elements (17, 117) of the connection ring (15, 115) is formed of a number of mutually connected ring segments, preferably two mutually connected ring halves (115A, 115B).

4. Blade according to any of the preceding claims wherein the elongated element (22, 122) extending from the second axial face of the ring shaped element (17, 117) are rod shaped elements, preferably solid rod shaped elements.

5. Blade according to claim 4 wherein the rod shaped elements have an essentially circular cylindrical outer surface.

6. Blade according to any of the preceding claims wherein the hub to root connection (16, 116) comprises a pitch bearing (26, 126) comprising a first bearing ring (25, 125) connected to the blade (6, 106) and a second bearing ring (27, 127) connected to the hub.

7. Blade according to claim 6 wherein the first bearing ring (25, 125) is an inner bearing ring of the pitch bearing.

8. Blade according to any of the claims 6 and 7 wherein the connection ring (15) forms the first bearing ring (25).

9. Blade according to any of the claims 6 and 7 wherein the hub to root connection (116) comprises a first annular flange (129) formed on the outer surface of the connection ring (115), a second annular flange (130) formed on an outer surface of the first bearing ring (125) and a clamp ring (132) comprising at least two separate clamp ring sections (132A, 132B), each having a flange receiving and clamping groove (133A, 133B), and fastening means (134) for interconnecting said clamp ring sections to exert tension for retaining said flanges in said grooves.

10. Blade according to claim 9 wherein the outer surface of the connection ring and the first bearing ring respectively are a radially outer surface thereof.

11. Method of manufacturing a wind turbine blade comprising a first blade shell half and a second blade shell half being interconnected along a leading edge and a trailing edge of the blade, said blade having a root and being formed of a fibre enforced composite material comprising reinforcement fibres embedded in a polymer matrix, said blade comprising a connection ring forming part of a root to hub connection between the hub and the root of the blade, said connection ring comprising a ring shaped element having a radially inner and a radially outer surface and a first and a second axial face, the first axial face being an end face of the root of the blade and the second axial face being provided with a plurality of elongated elements extending circumferentially interspaced from the second axial face and being embedded in the composite material of the blade and wherein said connection ring is formed of a first and a second connection ring half together forming the connection ring, said method comprising the following steps:
A1- providing a first mould (140A) having a first mould surface (141A) for forming an outer surface of the first blade half (116A) including a first root half surface (142A) thereof,
B1- arranging the first connection ring half (115A) in the root half surface (142A) of the first mould so as to form an end wall of the first mould,
C1- arranging reinforcement fibres in the first mould so as to cover the first mould surface (141A) and enclose the elongated elements (122) of the first connection ring half (115A),
D1- supplying polymer to the first mould (140A) during step C1 and/or subsequent thereto so as to impregnate the fibres,
E1- allowing the polymer to cure so as to form the first blade half,
A2- providing a second mould (140B) having a second mould surface (141 B) for forming an outer surface of the second blade half (116B) including a root half (142B) thereof,
B2- arranging the second connection ring half (115B) in the root half surface (142B) of the second mould so as to form an end wall of the second mould,
C2- arranging reinforcement fibres in the second mould (140B) so as to cover the second mould surface and enclose the elongated elements (122) of the second connection ring half (115B),
D2- supplying polymer to the second mould during step C2 and/or subsequent thereto so as to impregnate the fibres,
E2- allowing the polymer to cure so as to form the second blade half,
F- adhesively connection the first and second blade half so as to form the blade (116).

12. Method according to claim 11 wherein between step C1 and D1 and C2 and D2 respectively a vacuum bag (146A, 146B) is arranged on top of the mould (140A, 140B) and the vacuum bag sealed to the respective mould to define a mould cavity and the mould cavity is evacuated.

13. Method according to claim 11 or 12 wherein the first and second connection ring halves are mutually connected during step F or subsequent thereto.

14. Method according to any of the claims 11-13 wherein the connection ring (15) is a bearing ring of a pitch bearing (26) forming part of the root to hub connection (16).

15. Method according to any of the claims 11-13 wherein the connection ring (115) is provided with an annular flange of the radially outer surface (118) thereof.
